# EUROPEAN PATENT APPLICATION

(11) **EP 1 887 530 A1**
(43) Date of publication of application: **13.02.2008**
(21) Application number: 07113759.0
(22) Date of filing: 03.08.2007
(51) Int. Cl.: G07C 9/00, B60R 25/00

(54) **Vehicle opening/closing control system and method**

(30) Priority: 11.08.2006 JP 2006219746
(71) Applicant: NISSAN MOTOR CO., LTD., Yokohama-shi, Kanagawa 221-0023 (JP)
(72) Inventor: Kusunoki, Kiichi, Atsugi-shi Kanagawa 243-0192 (JP); Eguchi, Takashi, Atsugi-shi Kanagawa 243-0192 (JP); Hatayama, Hiroki, Atsugi-shi Kanagawa 243-0192 (JP); Asada, Tetsuya, Atsugi-shi Kanagawa 243-0192 (JP)
(74) Representative: Holmes, Matthew William

(57) **Abstract**

Opening and closing control method includes commencing an open or close operation of a vehicle component in response to an instruction signal for starting the open or close operation and ending the open or close operation if a wireless controller leaves a prescribed range of the vehicle prior to completion of the open or close operation.

## Description

The invention relates generally to a control system and control method for performing an opening/closing operation of a vehicle while a wireless controller is within a prescribed range of the vehicle. Aspects of the invention relate to a system, to a method and to a vehicle.

There are known devices for preventing doors from opening/closing due to malfunctions. For example, in Japanese Kokai Patent Application No. 2005-1573, a device for preventing doors from opening/closing due to malfunction is shown wherein the vehicle doors are opened or closed after at least two repetitions of door opening/closing signals from the remote controller have been detected.

It is an aim of the invention to improve upon such devices. Other aims and advantages of the invention will become apparent from the following description, claims and drawings.

Aspects of the invention therefore provide a system, a method and a vehicle as claimed in the appended claims.

According to another aspect of the invention there is provided an opening and closing control system for a vehicle, comprising a receiver configured to receive an opening or closing instruction signal from a wireless controller and a control unit configured to receive the instruction signal from the receiver, the control unit operable to judge whether the wireless controller is present within a prescribed range of the vehicle and perform an open or close operation of the vehicle when the receiver receives the instruction signal and while the wireless controller is present within the prescribed range.

In an embodiment, the controller is further operable to signal the drive unit to stop the open or close operation if the wireless controller leaves the prescribed range during the open or close operation.

The system may comprise a transmitter electrically coupled to the control unit and configured to transmit a prescribed signal; and wherein the control unit is further operable to judge that the wireless controller is absent from the prescribed range of the vehicle when no response signal is received from the wireless controller responsive to the prescribed signal.

The system may comprise a transmitter electrically coupled to the control unit and configured to transmit a prescribed signal; and wherein the control unit is further operable to judge whether the wireless controller is present within the prescribed range of the vehicle when the wireless controller returns a response signal responsive to the prescribed signal.

In an embodiment, the transmitter is further configured to transmit the prescribed signal repeatedly at a transmission interval of at least a prescribed period of time.

In an embodiment, the transmitter is further configured to change the transmission interval of the prescribed signal during the open or close operation.

In an embodiment, a second transmission interval at an end of the open or close operation is shorter than a first transmission interval at a start of the open or close operation.

In an embodiment, the control unit is further configured to change an interval of the response signal of the wireless controller by controlling the transmitter to transmit the prescribed signal at an interval longer than a prescribed time until the open or close operation of the vehicle component is complete.

In an embodiment, the control unit is further configured to change the interval of the response signal by shortening the interval of the response signal at an end of the open or close operation with respect to that at a start of the open or close operation.

In an embodiment, the wireless controller is configured to return the response signal responsive to the prescribed signal when a reception level of the prescribed signal is higher than a prescribed reception level.

The prescribed reception level may be contained in the prescribed signal. Alternatively, or in addition, the prescribed reception level may be stored in the wireless controller.

In an embodiment, the vehicle component is at least one of a window, a door and an electrically-driven roof.

According to another aspect of the invention there is provided an opening and closing control system for a vehicle, comprising means for receiving an opening or closing instruction signal for a vehicle component from a wireless controller, means for judging whether the wireless controller is present within a prescribed range of the vehicle and means for performing an open or close operation of the vehicle component when the receiving means receives the instruction signal and while the wireless controller is present within the prescribed range.

According to a further aspect of the invention there is provided an opening and closing control system for a vehicle, comprising a receiver configured to receive an opening or closing instruction signal from a wireless controller and a control unit configured to receive the instruction signal from the receiver to start and open or close operation, the control unit operable to judge whether the wireless controller is outside a prescribed range of the vehicle and stop the open or close operation of the vehicle while the wireless controller is outside the prescribed range during the open or close operation.

According to a still further aspect of the invention there is provided an opening and closing control method for a vehicle, comprising commencing an open or close operation of a vehicle component in response to an instruction signal for starting the open or close operation and ending the open or close operation if a wireless controller leaves a prescribed range of the vehicle prior to completion of the open or close operation.

The method may comprise transmitting the instruction signal for starting the open or close operation using the wireless controller.

The method may comprise periodically transmitting a prescribed signal to the wireless controller from the vehicle after commencing the open or close operation and judging if the wireless controller leaves the prescribed range of the vehicle prior to completion of the open or close operation when the wireless controller does not transmit a reception signal responsive to the prescribed signal.

The method may comprise changing a period of transmission of the prescribed signal while performing the open or close operation.

In an embodiment the method comprises transmitting the reception signal from the wireless controller when a reception level of the prescribed signal by the wireless controller is higher than a prescribed reception level.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
FIG. 1 is a diagram illustrating a vehicle opening/closing control system according to a first embodiment;
FIG. 2 is a diagram illustrating the coverage areas of an RF signal and an LF signal;
FIG. 3 is a flow chart illustrating the processing performed by a wireless controller according to an example;
FIG. 4 is a flow chart illustrating the processing performed by an opening/closing controller according to an example;
FIG. 5 is a flow chart illustrating the processing performed by a wireless controller according to an example where the system according to the first embodiment does not require continued operation of the opening/closing switch;
FIG. 6 is a flow chart illustrating the processing performed by the wireless controller in a vehicle opening/closing control system according to a second embodiment;
FIG. 7 is a flow chart illustrating processing performed by the wireless controller in an example wherein the system according to the embodiment does not require continued operation of the opening/closing switch;
FIG. 8 is a diagram illustrating an example of the relationship between the signal range of an LF reception signal and a prescribed range of the vehicle;
FIG. 9 is a diagram illustrating the signal timing for the opening/closing controller and wireless controller in the vehicle opening/closing control system in the first and second embodiments;
FIG. 10 is a diagram illustrating the signal timing for the opening/closing controller and wireless controller in a vehicle opening/closing control system according to a third embodiment; and
FIG. 11 is a diagram illustrating the signal timing wherein the initial transmission interval of the door opening/closing operation is initially set at T1 and subsequently set at T2.

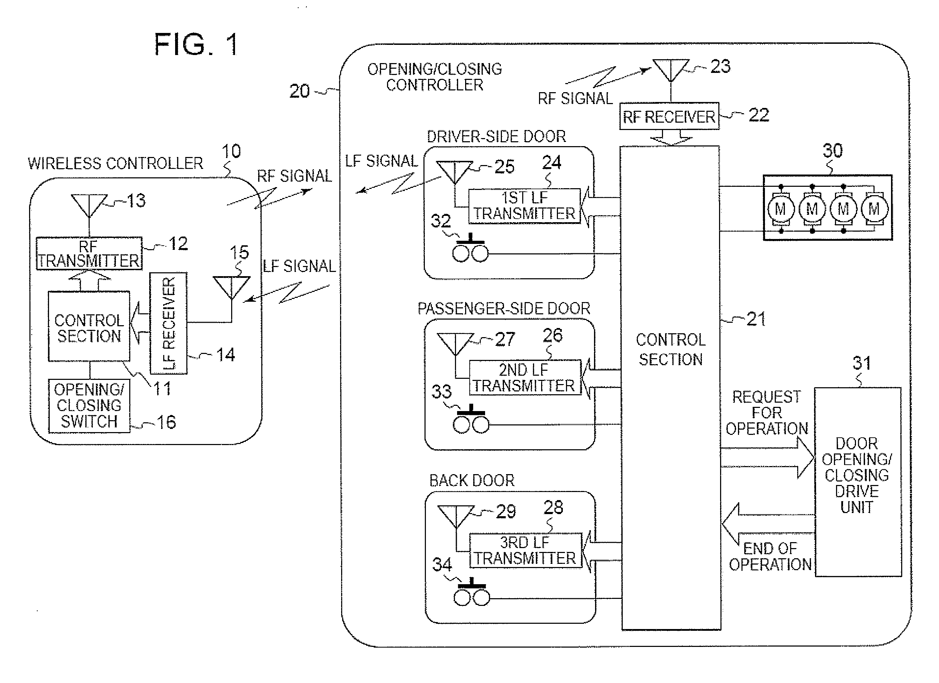

FIG. 1 is a diagram illustrating a vehicle opening/closing control system according to a first embodiment. The vehicle opening/closing control system includes a wireless controller (remote controller) 10 carried by the user and an opening/closing controller 20 carried on the vehicle. An example of vehicle door opening/closing control is herein explained based on an instruction from wireless controller 10, wherein the vehicle doors include a sliding door on the driver side, a sliding door on the passenger side and a rear door.

Wireless controller 10 has a control section 11, an RF transmitter 12, an antenna 13, an LF receiver 14, an antenna 15, and an opening/closing switch 16. Opening/closing switch 16 is a switch that causes an instruction signal for opening/closing the vehicle doors to be transmitted. Upon operation of opening/closing switch 16, control section 11 causes RF transmitter 12 to transmit an opening/closing start request signal and an RF opening/closing execution request signal via antenna 13. RF opening/closing start request signal is an instruction signal for starting the vehicle door opening/closing operation, and RF opening/closing execution request signal is a response signal with respect to the LF reception signal, to be explained later.

LF receiver 14 receives via antenna 15 the LF reception signal transmitted from opening/closing controller 20. The LF reception signal is a signal indicating reception of the RF opening/closing start request signal or the RF opening/closing execution request signal by the opening/closing controller 20, and it is also the signal for checking whether wireless controller 10 is present within prescribed areas 230a-230c, to be explained later.

Based on operation of opening/closing switch 16 by the user, control section 11 sends an instruction to RF transmitter 12 so that the RF opening/closing start request signal is transmitted. When LF receiver 14 receives the LF reception signal, it also sends an instruction to RF transmitter 12 so that the RF opening/closing execution request signal is transmitted.

Opening/closing controller 20 has a control section 21, an RF receiver 22, an antenna 23, a first LF transmitter 24, an antenna 25, a second LF transmitter 26, an antenna 27, a third LF transmitter 28, an antenna 29, actuators 30, a door opening/closing drive unit 31 and request switches 32-34.

Via antenna 23, RF receiver 22 receives the RF opening/closing start request signal and the RF opening/closing execution request signal transmitted from wireless controller 10. First LF transmitter 24 is arranged on the sliding door on the driver side. Based on an instruction from control section 21, first LF transmitter 24 transmits an LF reception signal via antenna 25. Second LF transmitter 26 is arranged on the sliding door on the passenger side. Based on an instruction from control section 21, second LF transmitter 26 transmits an LF reception signal via antenna 27. Third LF transmitter 28 is arranged on the rear door. Based on an instruction from control section 21, third LF transmitter 28 transmits an LF reception signal via antenna 29.

Based on an instruction from control section 21, an actuator represented generally by actuators 30 performs a door locking/unlocking operation. Based on an instruction from control section 21, actuators represented generally by actuators 30 drive sliding door opening/closing and rear door opening/dosing, for example, responsive to opening/closing drive unit 31, which is constructed according to known methods. The request switches 32-34 are switches operated by the user to perform a door locking/unlocking operation. As will be explained later, control section 21 sends various instructions to first LF transmitter 24, second LF transmitter 26, third LF transmitter 28 and door opening/closing drive unit 31.

Wireless controller 10 and opening/closing controller 20 comprise a number of hardware components as described above. Control sections 11 and 21 are also called control units herein and generally each comprises a microcomputer including a central processing unit (CPU), input and output ports (I/O), random access memory (RAM), keep alive memory (KAM), a common data bus and read-only memory (ROM) as an electronic storage medium for one or more executable software programs operating as discussed hereinafter.

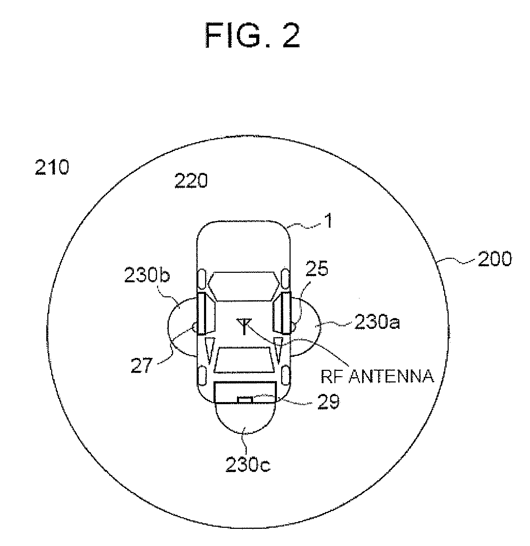

FIG. 2 is a diagram illustrating the area where the electromagnetic waves of the RF signal and the LF signal can reach. An RF signal (RF opening/closing start request signal and RF opening/closing execution request signal) transmitted by wireless controller 10 from area 210 on the outer side of circle 200 cannot reach opening/closing controller 20 mounted on vehicle 1. Also, an LF signal (LF reception signal) transmitted by opening/closing controller 20 cannot reach wireless controller 10. Consequently, when an RF signal is transmitted from wireless controller 10 present in area 210, the RF signal cannot reach the opening/closing controller 20.

Among the areas on the inner side of circle 200, although the RF signal transmitted from wireless controller 10 from area 220 excluding areas 230a-230c can reach opening/closing controller 20 mounted on vehicle 1, the LF signal transmitted from opening/closing controller 20 cannot reach wireless controller 10. Areas 230a, 230b, 230c are areas near antennas 25, 27, 29, respectively. In these areas, the RF signal transmitted from wireless controller 10 can reach vehicle 1, and the LF signal transmitted from opening/closing controller 20 can reach wireless controller 10.

In the vehicle opening/closing control system according to the first embodiment, after the user operates opening/closing switch 16 to send a vehicle door opening/closing instruction, the door opening/closing operation is continued if the user stays within areas 230a, 230b, 230c. When the user leaves areas 230a, 230b, 230c after operating the opening/closing switch 16 the door opening/closing operation is controlled to stop.

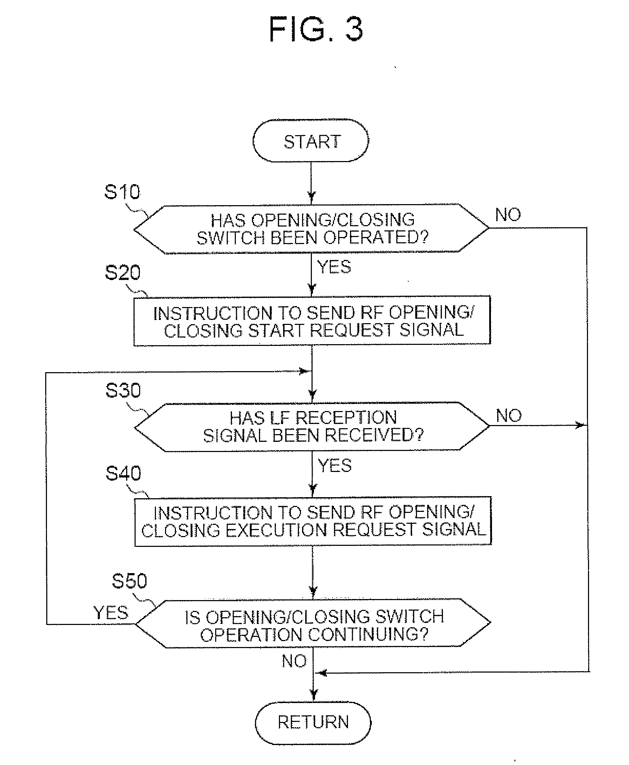

FIG. 3 is a flow chart illustrating the processing performed by wireless controller 10. Here, the processing performed when the user continues operating opening/closing switch 16 in order to continue the vehicle door opening/closing operation is explained. The processing starting from step S10 is performed by means of control section 11.

In step S10, a judgment is made on whether opening/closing switch 16 has been operated. If it is judged that opening/closing switch 16 has been not operated, the process comes to an end. On the other hand, if it is judged that opening/closing switch 16 has been operated, the process goes to step S20. In step S20, an instruction is sent to RF transmitter 12 so that it will transmit an RF opening/closing start request signal. After receiving this instruction, RF transmitter 12 transmits the RF opening/closing start request signal via antenna 13.

After step S20, a judgment is made on whether an LF reception signal transmitted from opening/closing controller 20 has been received by LF receiver 14 in step S30. If the LF reception signal has not been received, the flow chart processing comes to an end. If the LF reception signal has been received, the process goes to step S40.

In step S40 an instruction is sent to RF transmitter 12 for an RF opening/closing execution request signal to be transmitted. After receiving this instruction, RF transmitter 12 transmits an RF opening/closing execution request signal via antenna 13. In next step S50, a judgment is made on whether opening/closing switch 16 continues to be operated. If opening/closing switch 16 continues to be operated, process flow returns to step S30. On the other hand, if opening/closing switch 16 is not being operated, the process comes to an end.

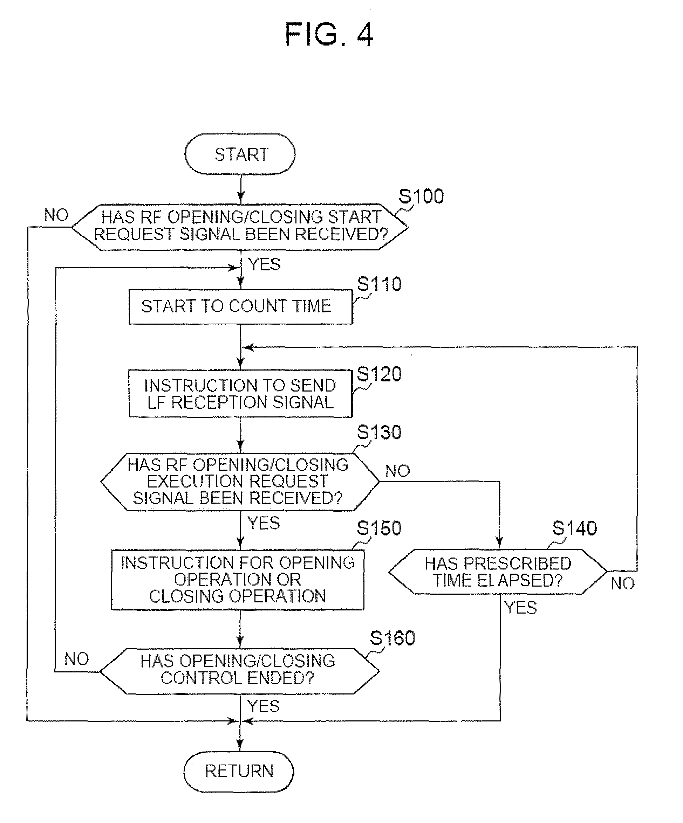

FIG. 4 is a flow chart illustrating the processing performed by opening/closing controller 20. The processing starting from step S100 is performed by control section 21. In step S100, a judgment is made on whether an RF opening/closing start request signal transmitted from wireless controller 10 has been received by RF receiver 22. If an RF opening/closing start request signal has not been received, the flow chart processing comes to an end. In contrast, if an RF opening/closing start request signal has been received, the process goes to step S110.

In step S110 time counting is started by means of a timer provided inside control section 21, and the process then goes to step S120. In step S120 an instruction is sent from wireless controller 10 to first LF transmitter 24, second LF transmitter 26 and third LF transmitter 28 such that an LF reception signal indicating reception of the RF opening/closing start request signal is transmitted. After receiving this instruction, first LF transmitter 24, second LF transmitter 26 and third LF transmitter 28, respectively, transmit the LF reception signals.

After step S120 a judgment is made on whether the RF opening/closing execution request signal transmitted from wireless controller 10 has been received by RF receiver 22 in step S130. When an RF opening/closing execution request signal has not been received, the process goes to step S140. When an RF opening/closing execution request signal has been received, the process goes to step S150.

In step S140 a judgment is made on whether the elapsed time counted by the timer started in step S110 has reached the prescribed time. When the prescribed time has been reached, the flow chart processing comes to an end. If the prescribed time has not been reached, the process returns to step S120.

On the other hand, in step S150 an instruction for performing the opening operation or closing operation of the doors according to the opening/closing instruction is sent to door opening/closing drive unit 31. Because the RF opening/closing start request signal contains data requesting the opening operation or the closing operation and data specifying the door to be opened/closed, control section 21 instructs door opening/closing drive unit 31 as to which door should be opened/closed based on the received RF opening/closing start request signal. When door opening/closing drive unit 31 receives a door opening operation instruction, it starts control to open the specified door using the appropriate actuator 30. In contrast, when door opening/closing drive unit 31 receives a door closing operation instruction, it starts closing the specified door using the appropriate actuator 30.

After step S150 a judgment is made on whether control for opening the specified door or control for closing the specified door has come to an end (i.e., has been completed) in step S160. If it is judged that door opening/closing control has not come to an end, the process returns to step S110, and when it is judged that opening/closing control has come to an end, the process ends.

The operation of the vehicle opening/closing control system according to the first embodiment can be summarized. When the RF opening/closing start request signal from wireless controller 10 is received by opening/closing controller 20, opening/closing controller 20 transmits the LF reception signal. When wireless controller 10 is present in areas 230a, 230b, 230c shown in FIG. 2, the LF reception signal can be received, and when the LF reception signal is received, the RF opening/closing execution request signal is transmitted. During the period up until the end of door opening/closing control, opening/closing controller 20 repeatedly transmits the LF reception signal, and the door opening/closing operation is continued during the period when the RF opening/closing execution request signal continues to be received from wireless controller 10. Also, if the RF opening/closing execution request signal from wireless controller 10 cannot be received, the door opening operation or closing operation is stopped.

That is, the opening/closing operation of the specified door can only continue while the user owning wireless controller 10 is present within the prescribed range of the vehicle. As a result, only when the user is in a position where the door opening/closing operation can be checked can the door opening/closing operation continue.

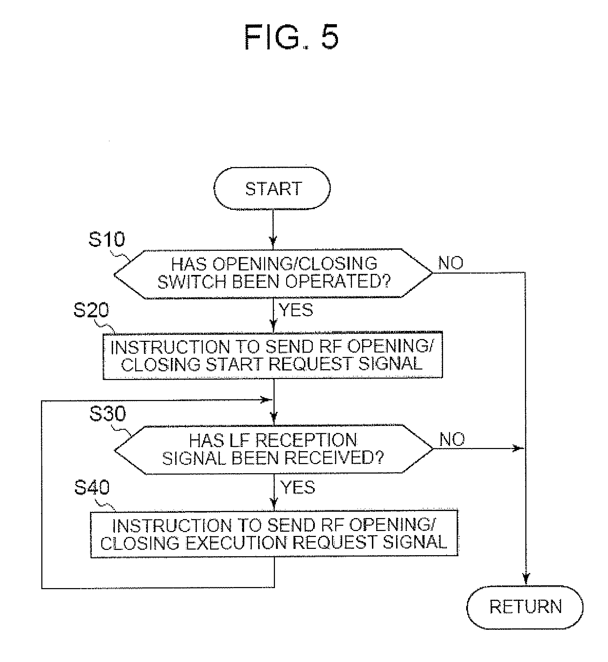

Also, in this control, the user should continue operating opening/closing switch 16 in areas 230a, 230b, 230c in order to continue the opening/closing control of the door. However, when the user has operated opening/closing switch 16 once, door opening/closing control can still be continued even when the operation of opening/closing switch 16 is not continued as long as the user is within areas 230a, 230b, 230c. In the following, the processing performed on the side of wireless controller 10 to achieve this is explained with reference to the flow chart shown in FIG. 5.

In the flow chart shown in FIG. 5, the like reference numerals refer to identical steps as explained in regard to FIG. 3. However, the process shown in FIG. 5 differs from the process shown in FIG. 3 in that it omits step S50. That is, in step S30, when it is concluded that the LF reception signal transmitted from opening/closing controller 20 has been received by LF receiver 14, in step S40 the RF opening/closing execution request signal is transmitted via antenna 15. Then, even if the user does not continue operating opening/closing switch 16, it is possible to receive the LF reception signal as long as the user is within areas 230a, 230b, 230c, so that the RF opening/closing execution request signal continues to be transmitted based on reception of the LF reception signal. According to this method, once the user operates opening/closing switch 16, there is no need to continue operating opening/closing switch 16. As a result, the process becomes more convenient.

For the vehicle opening/closing control system according to the first embodiment, when the RF opening/closing start request signal transmitted from wireless controller 10 is received by opening/closing controller 20, a judgment is made on whether wireless controller 10 is present within the prescribed range of the vehicle. As long as wireless controller 10 is present in the prescribed range, the opening/closing operation of the opening/closing object (door) of the vehicle is continued. As a result, after the opening/closing instruction for opening/closing the object is sent, if the user carrying wireless controller 10 departs from the vehicle and leaves the prescribed range, the opening/closing operation of the opening/closing object can be stopped.

Also, in the vehicle opening/closing control system according to the first embodiment, opening/closing controller 20 transmits the LF reception signal to check whether wireless controller 10 is present within the prescribed range. If wireless controller 10 returns the response signal (RF opening/closing execution request signal) with respect to the LF reception signal, it is judged that wireless controller 10 is present within the prescribed range of the vehicle. As a result, it is possible to judge reliably whether wireless controller 10 is present within the prescribed range of the vehicle. Also, opening/closing controller 20 transmits the LF reception signal to check whether wireless controller 10 is outside the prescribed range. If wireless controller 10 does not return the response signal (RF opening/closing execution request signal) with respect to the LF reception signal, it is concluded that wireless controller 10 is outside the prescribed range of the vehicle. As a result, it is possible to make a reliable judgment on whether wireless controller 10 is outside the prescribed range of the vehicle.

A vehicle opening/closing control system according to a second embodiment is the same as that of the vehicle opening/closing control system except with respect to the content of the processing performed inside wireless controller 10 and opening/closing controller 20.

In the vehicle opening/closing control system according to the second embodiment, when wireless controller 10 receives the LF reception signal, the reception level (reception intensity) of the received LF reception signal is compared with a prescribed reception level, and the RF opening/closing execution request signal is transmitted to opening/closing controller 20 when the reception level of the LF reception signal is higher than the prescribed reception level. The prescribed reception level is contained as data in the LF reception signal transmitted from opening/closing controller 20.

The prescribed reception level is preset in control section 21 of opening/closing controller 20 based on the reception sensitivity of wireless controller 10 and the detection range of wireless controller 10. For example, this setup operation can be performed at the manufacturing plant. When the LF reception signal is transmitted, opening/closing controller 20 transmits the preset reception level data in the LF reception signal.

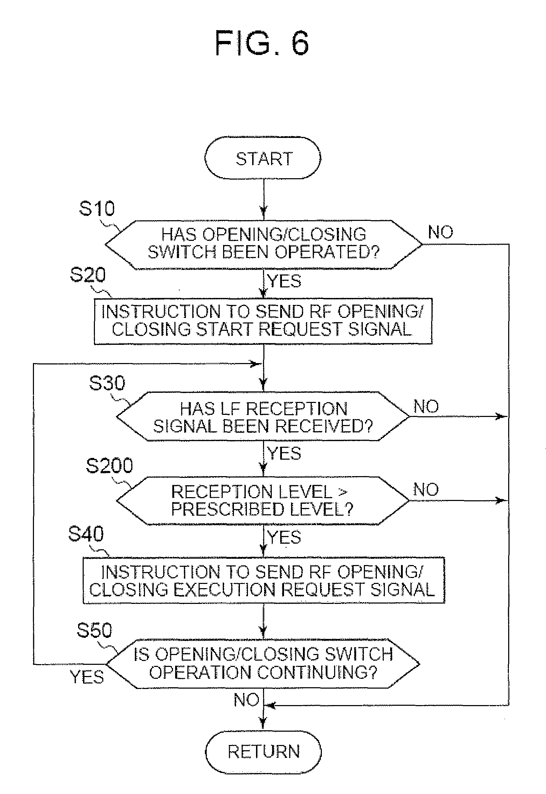

FIG. 6 is a flow chart illustrating the processing performed in wireless controller 10 in the second embodiment. Like reference numerals are used for like steps as explained with regard to FIG. 3. The processing of steps S10-S30 in FIG. 6 proceeds as previously described with respect to FIG. 3. In FIG. 6, however, when the judgment result in step S30 is YES, process flow goes to step S200.

In step S200 a judgment is made on whether the reception level of the LF reception signal received from opening/closing controller 20 is higher than the prescribed reception level contained as data in the received LF reception signal. If the reception level of the received LF reception signal is higher than the prescribed reception level, the process advances to step S40. In step S40, an instruction is sent to RF transmitter 12 such that the RF opening/closing execution request signal is transmitted. After receiving this instruction, RF transmitter 12 transmits the RF opening/closing execution request signal via antenna 15.

On the other hand, when the response to step S200 is that the reception level of the LF reception signal received from opening/closing controller 20 is lower than the prescribed reception level, the flow chart processing shown in FIG. 6 comes to an end.

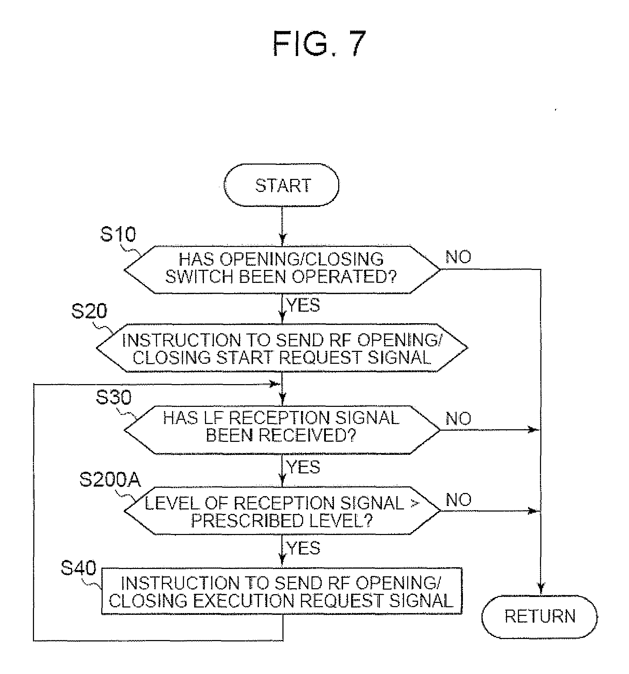

Also, in the flow chart shown in FIG. 6 the processing is explained for a situation where it is necessary to continue operating opening/closing switch 16 to continue the door opening/closing control. However, even when the user simply operates opening/closing switch 16 once, the same processing can be performed to continue the door opening/closing operation. The processing performed on the side of wireless controller 10 can be explained with reference to the flow chart shown in FIG. 7.

The flow chart shown in FIG. 7 corresponds in part to the flow chart shown in FIG. 5 but differs in that step S200A is added between steps S30 and S40. In step S200A, a judgment is made on whether the reception level of the LF reception signal received from opening/closing controller 20 is higher than a prescribed reception level. If the reception level is higher than the prescribed reception level, the process advances to step S40. On the other hand, if the reception level of the LF reception signal is lower than the prescribed reception level, the flow chart processing shown in FIG. 7 comes to an end.

According to the vehicle opening/closing control system of the second embodiment, if the reception level when the LF reception signal is received by wireless controller 10 is higher than the prescribed reception level, a response signal (RF opening/closing execution request signal) is returned. As a result, it is possible to set the range where it is judged that wireless controller 10 is present within the prescribed range of the vehicle inside the range reached by the LF reception signal.

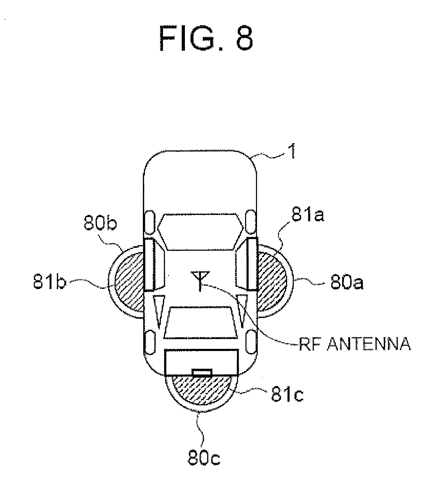

FIG. 8 is a diagram illustrating the relationship between the range where the LF reception signal can reach and the range where a judgment is made that wireless controller 10 is present within the prescribed range of the vehicle. If wireless controller 10 is within signal-reachable ranges 80a-80c, it is possible to receive the LF reception signal. Among these, when wireless controller 10 is within areas 81a-81c where the reception level of the LF reception signal is higher than the prescribed reception level, a response signal (RF opening/closing execution request signal) is returned. Areas 81 a-81 c can be set at will by changing the prescribed reception level. That is, when the prescribed reception level is raised, areas 81a-81c are reduced, and when the prescribed reception level is lowered, areas 81 a-81 c are expanded.

Also, even when there is variation in the reception sensitivity of wireless controller 10, by setting the prescribed reception level corresponding to the variation in the reception sensitivity of wireless controller 10, it is possible to ensure consistent ranges where it is judged that wireless controller 10 is present.

In a vehicle opening/closing control system according to a third embodiment, power consumption of the wireless controller 10 is reduced. In the first and second embodiments, as the user operates opening/closing switch 16, the LF reception signal is transmitted repeatedly from opening/closing controller 20, and the RF opening/closing execution request signal is transmitted as a response from wireless controller 10 repeatedly until the opening/closing control of the door is complete. That is, during the period until the opening/closing control of the door is complete, wireless controller 10 repeatedly transmits the RF opening/closing execution request signal. As a result, the electric power demand on the battery rises. In the vehicle opening/closing control system according to the third embodiment, the interval for transmitting the RF opening/closing execution request signal from wireless controller 10 can be extended, and accordingly the electric power consumption of wireless controller 10 is reduced.

The constitution of the vehicle opening/closing control system according to the third embodiment is otherwise identical to that of the vehicle opening/closing control system according to the first embodiment, and it differs only in the processing performed in wireless controller 10 and opening/closing controller 20.

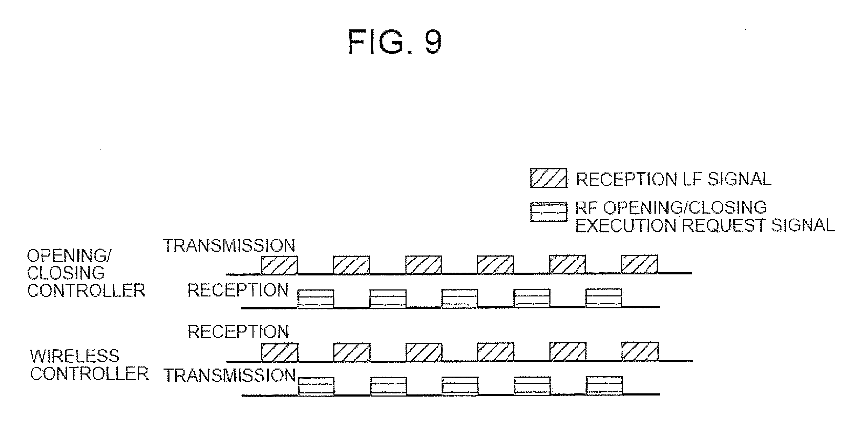

FIG. 9 is a diagram illustrating the signal timing for opening/closing controller 20 and wireless controller 10 in the vehicle opening/closing control system according to the first and second embodiments. As explained above, when wireless controller 10 receives the LF reception signal from opening/closing controller 20, it transmits the RF opening/closing execution request signal. When opening/closing controller 20 receives the RF opening/closing execution request signal from wireless controller 10, it transmits the LF reception signal. Accordingly, bidirectional communication between opening/closing controller 20 and wireless controller 10 is maintained.

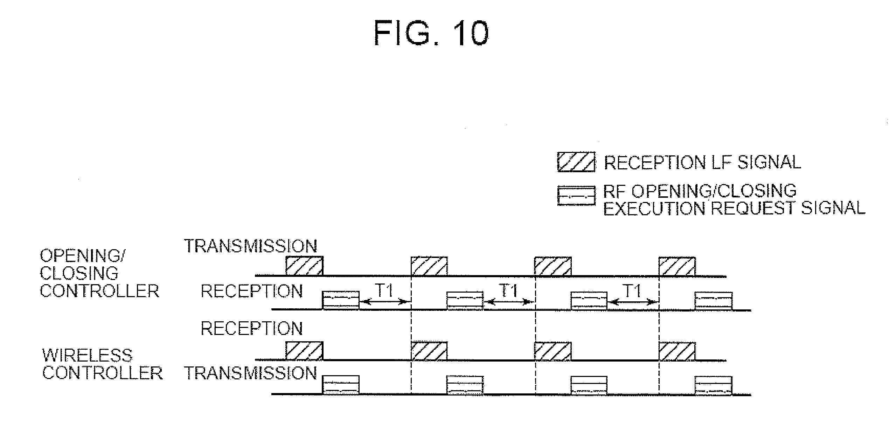

FIG. 10 is a diagram illustrating the signal timing for opening/closing controller 20 and wireless controller 10 in the vehicle opening/closing control system according to the third embodiment. When wireless controller 10 receives the LF reception signal from opening/closing controller 20, opening/closing controller 20 transmits the RF opening/closing execution request signal. When opening/closing controller 20 receives the RF opening/closing execution request signal from wireless controller 10, the LF reception signal is transmitted after a prescribed time T1 has elapsed. As a result, compared with the case when the LF reception signal is transmitted soon after reception of the RF opening/closing execution request signal (see FIG. 9), the number of repetitions of transmission of the LF reception signal can be reduced. Consequently, the number of repetitions of transmission of the RF opening/closing execution request signal transmitted from wireless controller 10 is also reduced. As a result, it is possible to cut the electric power demand on the battery in wireless controller 10. In this case, the transmission interval for the RF opening/closing execution request signals transmitted from wireless controller 10 will be longer than the prescribed time T1.

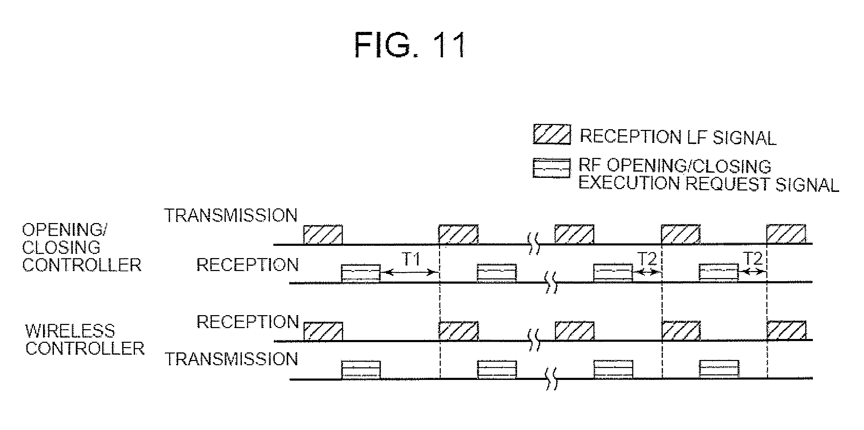

With the signal timing shown in FIG. 10, the interval between reception of the RF opening/closing execution request signal and transmission of the LF reception signal is constant at T1. It is also possible to change this interval, however. For example, assuming this transmission interval immediately after the start of door opening/closing control to be T1, after the door opening/closing operation has progressed a certain amount, the transmission interval can become T2 (shorter than T1). FIG. 11 shows the signal timing when the transmission interval immediately after the start of door opening/closing control is T1, and the transmission interval becomes T2 after the door opening/closing operation has progressed a certain amount.

As explained above, the door opening/closing operation is stopped by the opening/closing controller 20 if no RF opening/closing execution request signal is transmitted from wireless controller 10 in response to the LF reception signal. Here, when the door is being closed, it is preferable that the door opening/closing control be stopped quickly if the user is out of the area where wireless controller 10 can receive the LF reception signal. Consequently, as shown in FIG. 11, when the door opening/closing operation has progressed a certain amount, it is possible to check whether wireless controller 10 is present within the range where the wireless controller can receive the LF reception signal more quickly by shortening the interval between reception of the RF opening/closing execution request signal to transmission of the LF reception signal, so that when the user is away from the vehicle, the door opening/closing control can be stopped more quickly.

In the vehicle opening/closing control system according to the third embodiment, the transmission interval between the RF opening/closing execution request signals transmitted from wireless controller 10 is longer than a prescribed time T1, so that it is possible to cut the electric power demand on the battery of wireless controller 10. In particular, by making the transmission interval between the LF reception signals transmitted from opening/closing controller 20 longer than the prescribed time T1, it is possible to make the transmission interval between the response signals (RF opening/closing execution request signals) of wireless controller 10 to the LF reception signals longer than the prescribed time T1.

Also, according to the vehicle opening/closing control system of the third embodiment, the transmission interval of the response signals (RF opening/closing execution request signals) transmitted by wireless controller 10 can be changed during the opening/closing operation until the operation is complete. In particular, the signal transmission interval at the end of the opening/closing operation of the opening/closing object is shorter than that at the start, so that the door opening/closing control can be stopped more quickly when the user is away from the vehicle.

Further, according to the vehicle opening/closing control system of the third embodiment, the transmission interval between the LF reception signals transmitted by opening/closing controller 20 can be changed during the opening/closing operation until the operation is complete. In particular, the signal transmission interval at the end of the opening/closing operation of the opening/closing object is shorter than that at the start. As a result, it is possible for the door opening/closing control to be stopped more quickly when the user is away from the vehicle.

The invention is not limited to these described embodiments. For example, the vehicle opening/closing object refers to a sliding door on the driver side, a sliding door on the passenger side and a rear door in the example presented above. However, the opening/closing object is not limited to the vehicle doors, but rather may also include electrically opened and closed windows or an electrically driven roof, such as a sunroof or a convertible top that can be stored in the trunk. Additionally, the sliding door presented as an example of a vehicle door could also be a conventional, hinged vehicle door adapted for electrically-driven opening and closing.

In the examples, when opening/closing controller 20 receives the RF opening/closing start request signal or the RF opening/closing execution request signal from wireless controller 10, the LF reception signal is transmitted from first LF transmitter 24, second LF transmitter 26 and third LF transmitter 28. However, a scheme can also be adopted in which the LF reception signal is transmitted only from the LF transmitter provided corresponding to the door to which the opening/closing instruction is sent by the user. For example, when the user sends an instruction to open the rear door by means of wireless controller 10, the LF reception signal is transmitted only from third LF transmitter 28 provided corresponding to the rear door. In this case, the opening operation of the rear door is continued as long as the user is in area 230c shown in FIG. 2.

For the vehicle opening/closing control system in the second embodiment, a case has been explained in which the data concerning the prescribed reception level for comparison with the reception level of the LF reception signal are contained in the LF reception signal transmitted from opening/closing controller 20. However, a scheme can also be adopted in which said data is pre-stored in control section 11 of wireless controller 10.

In the vehicle opening/closing control system according to the third embodiment, the signal transmission interval at the end of the opening/closing operation of the opening/closing object is shorter than that at the start of the opening/closing operation of the opening/closing object (see FIG. 11). Here, the interval between reception of the RF opening/closing execution request signal by opening/closing controller 20 and transmission of the LF reception signal, that is, the transmission interval for the LF reception signal of opening/closing controller 20 and the transmission interval for the RF opening/closing execution request signal of wireless controller 10, can be divided into three or more steps instead of the described two steps. Accordingly, the transmission interval can be made shorter or it can be made gradually shorter in steps.

In the application examples, when the RF opening/closing start request signal transmitted from wireless controller 10 is received by opening/closing controller 20, a judgment is made on whether wireless controller 10 is present within the prescribed range of the vehicle. The opening/closing operation of the opening/closing object (here, a door) of the vehicle can be continued only during the period when it is judged that the wireless controller is within the prescribed range. The invention is not limited to this scheme, however. For example, the following scheme can also be adopted. When opening/closing controller 20 transmits the LF reception signal for checking whether wireless controller 10 is outside the prescribed range, and wireless controller 10 does not return the response signal (RF opening/closing execution request signal) with respect to the LF reception signal, it can be concluded that wireless controller 10 is outside the prescribed range of the vehicle. As a result, after the opening/closing instruction for the opening/closing object is transmitted, the opening/closing operation of the opening/closing object can be stopped if the user carrying wireless controller 10 is away from the vehicle and outside the prescribed range.

As described, the opening/closing operation of the opening/closing object is stopped when the user carrying wireless controller 10 is away from the vehicle and outside a prescribed range. However, instead of maintaining the OFF state even after wireless controller 10 departs from the prescribed range, the opening/closing operation may be reversed to return the opening/closing object to the state that it was in before the RF opening/closing start request signal was received (such as the fully closed state).

Accordingly, the above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application No. 2006-219746, filed 11th August 2006, the contents of which are expressly incorporated herein by reference.

## Claims

1. An opening and closing control system for a vehicle, comprising:
receiver means for receiving an opening or closing instruction signal from a wireless controller; and
control means for receiving the instruction signal from the receiver;
wherein the control means is arranged to judge whether the wireless controller is within or outside a prescribed range of the vehicle and to:
perform an open or close operation of the vehicle when the receiver receives the instruction signal while the wireless controller is present within the prescribed range; and/or
stop the open or close operation of the vehicle while the wireless controller is outside the prescribed range during the open or close operation.

2. A system as claimed in claim 1 wherein the control means is arranged to signal the drive unit to stop the open or close operation if the wireless controller leaves the prescribed range during the open or close operation.

3. A system as claimed in claim 1 or claim 2 comprising transmitter means electrically coupled to the control means and arranged to transmit a prescribed signal;
wherein the control unit is arranged to:
judge that the wireless controller is outside the prescribed range of the vehicle when no response signal is received from the wireless controller responsive to the prescribed signal; and/or
judge that the wireless controller is within the prescribed range of the vehicle when the wireless controller returns a response signal responsive to the prescribed signal.

4. A system as claimed in claim 3 wherein the transmitter means is arranged to transmit the prescribed signal repeatedly at a transmission interval of at least a prescribed period of time.

5. A system as claimed in claim 4 wherein the transmitter means is arranged to change the transmission interval of the prescribed signal during the open or close operation.

6. A system as claimed in any of claims 3 to 5 wherein the control means is arranged to change an interval of the response signal of the wireless controller:
by controlling the transmitter means to transmit the prescribed signal at an interval longer than a prescribed time until the open or close operation of the vehicle component is complete; and/or
by shortening the interval of the response signal at an end of the open or close operation with respect to that at a start of the open or close operation.

7. A system as claimed in any of claims 3 to 6 wherein the wireless controller is arranged to return the response signal responsive to the prescribed signal when a reception level of the prescribed signal is higher than a prescribed reception level.

8. A method for a vehicle comprising:
commencing an open or close operation of a vehicle component in response to an instruction signal for starting the open or close operation; and
ending the open or close operation if a wireless controller leaves a prescribed range of the vehicle prior to completion of the open or close operation.

9. A method as claimed in claim 8 comprising:
periodically transmitting a prescribed signal to the wireless controller from the vehicle after commencing the open or close operation; and
judging if the wireless controller leaves the prescribed range of the vehicle prior to completion of the open or close operation when the wireless controller does not transmit a reception signal responsive to the prescribed signal.

10. A method as claimed in claim 9 comprising changing a period of transmission of the prescribed signal while performing the open or close operation.

11. A method as claimed in claim 9 or claim 10 comprising transmitting the reception signal from the wireless controller when a reception level of the prescribed signal by the wireless controller is higher than a prescribed reception level.

12. A vehicle having a system as claimed in any of claims 1 to 7.
